# EUROPÄISCHE PATENTSCHRIFT

(11) **EP 2 013 545 B1**
(45) Veröffentlichungstag und Bekanntmachung des Hinweises auf die Patenterteilung: **27.10.2010**
(21) Anmeldenummer: 07764777.4
(22) Anmeldetag: 22.06.2007
(51) Int. Cl.: F24F 6/10

(54) **VERFAHREN UND VORRICHTUNG ZUR FEUCHTEREGELUNG IN EINER KLIMAKAMMER**
METHOD AND APPARATUS FOR HUMIDITY REGULATION IN A CLIMATIC CHAMBER
PROCÉDÉ ET DISPOSITIF DE RÉGULATION DE L'HUMIDITÉ DANS UNE CHAMBRE CLIMATIQUE

(30) Priorität: 21.07.2006 DE 102006034290
(43) Veröffentlichungstag der Anmeldung: 14.01.2009
(73) Patentinhaber: Labotect GmbH, 37079 Göttingen (DE)
(72) Erfinder: RHEINLÄNDER, Hermann, 37308 Bernterode (DE)
(74) Vertreter: Schneider, Peter Christian
(86) Internationale Anmeldenummer: PCT/EP2007/005505
(87) Internationale Veröffentlichungsnummer: WO 2008/009341

(56) Entgegenhaltungen:
- FR-A- 2 465 959
- JP-A- 4 340 041
- US-B1- 6 175 687

## Beschreibung

Die Erfindung bezieht sich auf ein Verfahren zur Feuchteregelung in einer Klimakammer, wobei ein mit dem Innenraum der Klimakammer in Gasaustausch stehender, poröser Verdampferkörper durch Zuführung einer Verdampferflüssigkeit befeuchtet und diese durch Zuführung einer elektrischen Verdampferheizleistung zur Befeuchtung eines in der Klimakammer vorhandenen Atmosphärengases verdampft wird und wobei ein Feuchtewert des Atmosphärengases überwacht und die Flüssigkeitszuführung sowie die Verdampferheizleistung in Abhängigkeit von dem Feuchtewert geregelt werden, wobei eine Temperatur des Verdampferkorpers überwacht wird.

Die Erfindung bezieht sich weiter auf eine Vorrichtung zur Feuchteregelung in einer Klimakammer, umfassend
- einen porösen, mit der Klimakammer in Gasaustausch stehenden Verdampferkörper,
- eine Verdampferflüssigkeitszuleitung zur Zuführung von Verdampferflüssigkeit zum Verdampferkörper,
- ein mit dem Verdampferkörper in Wärme austauschender Verbindung stehendes, elektrisches Heizelement zur Zuführung von elektrischer Heizleistung um Verdampferkörper,
- einen Feuchtesensor zur Erfassung eines Feuchtewertes eines in der Klimakammer vorhandenen Atmosphärengases und
- eine Steuereinheit zur Regelung, in Abhängigkeit von dem Feuchtewert, der Zuführung von Verdampferflüssigkeit sowie der Zuführung von elektrischer Heizleistung in das Heizelement, wobei ein mit der Steuereinheit verbundener Temperatursensor zur Erfassung einer jeweils aktuellen Temparatur des Verdampfer-Korpers vorgesehen ist.

Ein solches Verfahren und eine solche Vorrichtung sind bekannt aus der FR-A-2 465 959. Daneben offendart die JP 04340041 A einen Präzisions-Verdampfungsbefeuchter. Bei dem bekannten Gerät sitzt ein poröser Verdampferkörper in einem Luftzuführungsstutzen, der von einem Strom zu befeuchtenden Atmosphärengases durchsetzt wird. Bei der Durchströmung des Stutzens nimmt das Atmosphärengas Feuchtigkeit aus dem porösen Verdampferkörper auf und transportiert diese in die Klimakammer. Man beachte, dass im Rahmen dieser Anmeldung der Begriff der Klimakammer weit zu verstehen ist. Insbesondere soll er jedwede Art von abgeschlossenem oder abschließbarem Raum umfassen, in dem das Raumklima, insbesondere die Temperatur und Feuchte eines im Raum befindlichen Atmosphärengases einstellbar ist. Hierunter fallen beispielsweise Inkubatoren zur Kultivierung und/oder Aufbewahrung biologischen Materials, beispielsweise Zellkulturen. Allerdings können auch Wohn- oder Büroräume von dem Begriff der Klimakammer, wie hier verwendet, erfasst sein.

Bei der bekannten Vorrichtung wird der Verdampferkörper im Überschuss mit Wasser befeuchtet, wobei überschüssiges Wasser aufgefangen und abgeleitet wird. In unmittelbarem Kontakt mit dem Verdampferkörper sind bei der bekannten Vorrichtung zwei Heizelektroden angeordnet, die mit elektrischer Heizleistung beaufschlagt werden und durch Erwärmung des Verdampferkörpers das in dessen Poren enthaltene Wasser verdampfen. Ein Feuchtesensor in der Klimakammer überwacht die relative Feuchte des Atmosphärengases und schaltet je nach Bedarf eine Sprinkleranlage zur weiteren Benetzung des Verdampferkörpers an bzw. aus und steuert den Pegel der angelegten Heizleistung kontinuierlich.

Diese bekannte Vorrichtung weist mehrere Nachteile auf. Zum einen wird durch die ständige Zufuhr an Heizleistung nicht benötigte Wärme in die Klimakammer eingetragen, die dann mit zusätzlichem Energieaufwand gegengekühlt werden muss, um eine konstante Temperatur beizubehalten. Weiter ist die Benetzung des Verdampferkörpers mit einer Sprinkleranlage nachteilig, da hier eine große Kontaminationsgefahr des zu verdampfenden Wassers bzw. durch das in einem Freistrahl auf den Verdampferkörper aufgetragene Wasser besteht. Schließlich ist die bekannte Vorrichtung für eine durchströmte Anordnung ausgelegt, die sich insbesondere für Wohnraum-Klimaanlagen eignet. Für abgeschlossene Inkubatoren ist.ein solch ständiger Luftstrom jedoch nachteilig, da insbesondere bei empfindlichem biologischem Material die entstehenden Turbulenzen schädlich sind und zum anderen erhöhter Energie- und Regelungsbedarf zur Beibehaltung einer konstanten Temperatur in der Klimakammer entsteht.

Als weiterer Stand der Technik sind Inkubatoren bekannt, die in einer großvolumigen, an die eigentliche Klimakammer angrenzenden Dampfkammer bei Bedarf Dampf erzeugen, der über eine Dampfleitung in die Klimakammer befördert wird. Um schnell auf ein Absinken der relativen Luftfeuchte reagieren zu können, wird hierbei der Verdampfer ständig beheizt. Nachteilig bei dieser bekannten Anordnung ist, dass über die Dampfleitung ständig Wärme in die Klimakammer eingetragen wird. Weiter ist eine präzise Regelung nur mit hohem Aufwand möglich, da die Steigerung bzw. Reduzierung der Dampferzeugung relativ lange Antwortzeiten zeigt. Die Regelung fällt daher entsprechend träge aus.

Schließlich ist als weiterer Stand der Technik bekannt, offene Wasserbecken in der Klimakammer zu positionieren. Hierdurch wird jedoch keine aktive Feuchteregelung erreicht. Zudem besteht eine große Gefahr der Kontamination des Wassers bzw. durch das Wasser.

Es ist eine Aufgabe der vorliegenden Erfindung, ein Verfahren und eine Vorrichtung zur Feuchteregelung in einer Klimakammer zur Verfügung zu stellen, die die Nachteile des Standes der Technik überwinden und insbesondere mit niedrigem Energie- und Regelungsaufwand eine präzise Feuchteregelung erlauben.

Diese Aufgabe wird in Verbindung mit den Merkmalen des Oberbegriffs von Anspruch 1 dadurch gelöst, dass die Regelung in einer Mehrzahl aufeinander folgender Zyklen, die in Abhängigkeit von dem jeweils aktuellen Feuchtewert angestoßen werden, erfolgt, wobei während jedes Zyklus eine einmalig zu Zyklusbeginn zugeführte Menge Verdampferflüssigkeit im Wesentlichen vollständig verdampft wird und nach einem Temperaturanstieg des Verdampferkörpers über einen vorgegebenen Schwellenwert hinaus der Zyklus unter Abbruch der Zuführung der Verdampferheizleistung beendet wird.

Die Aufgabe wird weiter in Verbindung mit den Merkmalen des Oberbegriffs von Anspruch 7 dadurch gelöst, dass die Steuereinheit eingerichtet ist, die Reglung in einer Mehrzahl aufeinander folgender und in Abhängigkeit von dem jeweils aktuellen Feuchtewert F angestoßene Zyklen durchzuführen, von denen jeder ein einmaliges Zuführen von Verdampferflüssigkeit, ein im Wesentlichen vollständiges Verdampfen der zugeführten Verdampferflüssigkeit, ein Erfassen eines Temperaturanstiegs des Verdampferkörpers über einen vorgegebenen Schwellenwert hinaus und einen nachfolgenden Abbruch der Heizleistungszuführung P umfasst.

Die einzelnen Merkmale der Erfindung, ihre Wirkung und Vorteile sollen nachfolgend für die erfindungsgemäße Vorrichtung und das erfindungsgemäße Verfahren gemeinsam erläutert werden.

Wesentlich für die vorliegende Erfindung ist die Überwachung einer Temperatur des Verdampferelementes. Dies ist vorzugsweise eine Temperatur in unmittelbarer Nähe der Eintragung der Heizleistung, d.h. insbesondere in der unmittelbaren Umgebung eines Heizelementes bzw. die Temperatur des Heizelementes selbst. Die Bedeutung dieser Temperaturüberwachung wird weiter unten detaillierter erläutert. Ein weiteres wesentliches Merkmal der Erfindung ist, dass die Feuchteregelung nicht kontinuierlich sondern in diskreten Zyklen erfolgt. Jeder Zyklus umfasst zunächst einen Eintrag von Verdampferflüssigkeit in das poröse Verdampferelement. Die einzutragende Menge Verdampferflüssigkeit ist vorzugsweise vorbestimmt und so abgestimmt, dass die Gesamtmenge vom Verdampferelement gehalten werden kann, d.h., dass sich insbesondere keine Tropfen bilden, die mit dem Atmosphärengas in der Klimakammer in Berührung kämen. Weiter umfasst jeder Zyklus die Zuführung von elektrischer Heizleistung, z.B. über ein am Verdampferkörper angebrachtes oder in diesen eingebettetes Heizelement. Die Heizleistung wird vorzugsweise mit konstantem Pegel zugeführt. Die Zuführung der Heizleistung erfolgt in jedem Zyklus solange, bis im Wesentlichen die gesamte im Verdampferkörper enthaltene Verdampferflüssigkeit verdampft ist. Dieser Zeitpunkt lässt sich anhand eines deutlichen Anstieges des überwachten Temperaturwertes erkennen. Solange nämlich der Verdampferkörper noch Verdampferflüssigkeit enthält, "kühlt" diese den Verdampferkörper im Bereich des Heizleistungseintrages im Wesentlichen auf ihre Siedetemperatur. Ist die gesamte Verdampferflüssigkeit verdampft, entfällt dieser Kühleffekt und die Temperatur steigt aufgrund des weiteren Heizleistungseintrages an. Zu diesem Zeitpunkt wird die Heizleistungszufuhr gestoppt und der Zyklus endet. Über einen an geeigneter Stelle in der Klimakammer angebrachten Feuchtesensor kann entschieden werden, ob eine vorbestimmte Ziel-Feuchte des Atmosphärengases erreicht ist oder ob es eines weiteren Befeuchtungszyklus bedarf. In letzterem Fall wird ein neuer Zyklus mit dem zuvor beschriebenen Schritten initiiert. Anderenfalls bleibt die Heizleistungszufuhr abgeschaltet und es erfolgt keine neue Benetzung des Verdampferkörpers bis zu einem späteren Zeitpunkt ein Abfallen des überwachten Feuchtewertes unterhalb eines vorbestimmten Schwellenwertes detektiert wird. Günstigerweise wird die Größe des Verdampferkörpers in Abstimmung mit der Größe der Klimakammer möglichst klein gewählt, um die Verdampferzyklen möglichst kurz zu halten. Auf diese Weise gelingt es, mit einer Vielzahl von Zyklen, die nahezu ohne Totzeit aufeinander folgen, jeweils kleine und vorbestimmte Feuchtemengen in die Klimakammer einzutragen, ohne zusätzlich unnötige Wärmeenergie einzubringen.

Die schnelle Abfolge der aufeinander folgenden Zyklen erlaubt eine Benetzung des Verdampferkörpers bevor dieser vollständig abgekühlt ist, so dass eine im Verdampferkörper verbliebene Restwärme bereits zur Verdampfung der neu eingetragenen Flüssigkeit genutzt werden kann und nicht an die Klimakammer abgegeben wird. Andererseits wird durch die obligatorische Abschaltung der Heizleistung am Ende jedes Zyklus eine Temperatursteigerung des Verdampferkörpers stark über den Siedepunkt der Verdampferflüssigkeit hinaus vermieden. Auch dies minimiert die in die Klimakammer eingetragene Wärme.

Zudem ist nach Erreichen der Ziel-Feuchte in der Klimakammer der Verdampferkörper trocken, so dass eine weitere Verdampfung, die auch ohne Zuführung von Heizleistung stattfinden würde und die Feuchte des Atmosphärengases über die Zielfeuchte hinaus erhöhen könnte, vermieden wird.

Schließlich ist die Erfindung auch unter hygienischen Bedingungen besonders vorteilhaft. Ist nämlich der Verdampferkörper kalt, so dass sich grundsätzlich Keime vermehren könnten, ist er auch trocken, so dass tatsächlich keine Keimvermehrung möglich ist. Ist andererseits der Verdampferkörper befeuchtet, so dass diese grundsätzliche Voraussetzung für eine Keimvermehrung gegeben ist, wird er gleichzeitig bis zur Siedetemperatur der Verdampferflüssigkeit erhitzt, so dass tatsächlich eine thermische Sterilisierung erfolgt. Die Sterilitätsanforderungen an die Verdampferflüssigkeitszufuhr sind aufgrund der Erfindung also vergleichsweise gering, so dass hierdurch Kosten, die durch externe Sterilisierung, Filterung etc. entstehen könnten, vermieden werden.

Besonders günstige Ausführungsformen der vorliegenden Erfindung sind in den abhängeigen Ansprüchen dargestellt.

Insbesondere ist es günstig, wenn zur Überwachung des Feuchtewertes jeweils der aktuelle Feuchtewert am Ende jedes Zyklus ermittelt wird. Zwar ist es auch möglich, zu anderen Zeitpunkten im Zyklus einen aktuellen Feuchtewert zu messen oder diesen kontinuierlich zu überwachen. Unter Gesichtspunkten des Messaufwandes ist es jedoch vorteilhaft, nur möglichst wenige aktuelle Feuchtewerte zu messen, wobei eine solche Messung vorzugsweise zu genau demjenigen Zeitpunkt erfolgt, zu dem ein Zyklus als Einheit abgeschlossen ist und eine Entscheidung ansteht, ob ein weiterer Zyklus anzustoßen ist oder nicht.

Bei einer besonders vorteilhaften Ausführung erfolgt, wie oben bereits erläutert, die Zuführung der Verdampferflüssigkeit über ein in den Verdampferkörper eingebettetes Rohr. Dieses Rohr ist günstigerweise außerhalb der Klimakammer mit einem Reservoir für Verdampferflüssigkeit, z.B. Wasser, verbunden. Grundsätzlich ist es ausreichend, wenn das Rohr eine einzelne Austrittsöffnung an seiner Stirnseite im Verdampferkörper aufweist. Bei anderen Ausführungsformen kann auch der Rohrmantel in dem Bereich, in dem er in den Verdampferkörper eingebettet ist, Perforationen aufweisen, um eine gleichmäßigere Befeuchtung des Verdampferkörpers zu gewährleisten. Der Vorteil der Einbettung des Rohres in den Verdampferkörper ist vorwiegend hygienischer Natur. Auf diese Weise wird nämlich ein Flüssigkeitsfreistrahl in der Klimakammer vermieden, der stets ein Kontaminationsrisiko birgt. Bei einem in dem Verdampferkörper eingebetteten Zuführungsrohr kommt das Atmosphärengas in der Klimakammer stets nur mit verdampfter, d.h. thermisch sterilisierter Flüssigkeit in Berührung.

Zur Steuerung des Flüssigkeitseintrages kann vorgesehen sein, dass die Verdampferflüssigkeitszuleitung ein Steuerventil umfasst, das von der Steuereinheit geeignet angesteuert wird. Dies setzt einen am Steuerventil anstehenden Flüssigkeitsdruck voraus. Alternativ oder zusätzlich kann eine von der Steuereinheit angesteuerte Pumpeneinheit vorgesehen sein, die die Verdampferflüssigkeitszuleitung bedarfsgemäß mit Druck beaufschlagt.

Der Verdampferkörper ist vorzugsweise ein poröser Keramikkörper, insbesondere ein poröser Borosilikat-Körper. Grundsätzlich kann auch jedes andere poröse Material verwendet werden, wobei jedoch darauf zu achten ist, dass das Material gegenüber der Verdampferflüssigkeit inert und gegenüber den auftretenden Temperaturen stabil ist. Im Hinblick auf die Regelungseffizienz ist auch die Wahl eines Materials mit geringer Wärmekapazität günstig. Günstigerweise ist das Volumen des Verdampferkörpers vergleichsweise klein. Als günstige Größenordnung für eine typische Klimakammer mit Volumen von etwa 15 bis 20 1 hat sich ein Verdampferkörpervolumen von 0,5 bis 5 cm³ erwiesen. Mit einer solchen Dimensionierung können Zyklusdauern von wenigen Sekunden, insbesondere im Bereich von 1 bis 10 Sekunden realisiert werden. Dieser Wert hat sich als günstig im Hinblick auf die Befeuchtungseffezienz und die Präzision der Feuchteregelung erwiesen.

Vorzugsweise ist der Verdampferkörper innerhalb der Klimakammer angeordnet. Grundsätzlich ist es zwar auch möglich, ihn in Luft austauschender Verbindung außerhalb der Klimakammer anzuordnen; dies führt jedoch zu einer Verringerung der Regelungseffizienz.

Grundsätzlich ist es möglich, die Temperatur des porösen Verdampferkörpers mit einem gesonderten Temperatursensor zu erfassen. Günstiger ist es jedoch, ein integriertes Heiz- und Sensorelement zu verwenden. Vorzugsweise weist das Heizelement einen temperaturabhängigen elektrischen Widerstand auf, wobei Messmittel zu Erfassung des jeweils aktuellen Widerstandswertes mit dem Heizelement einerseits und der Steuereinheit andererseits verbunden sind. Die Zuführung von Heizenergie erfolgt nämlich stets, indem ein Strom durch das Heizelement geschickt wird. Bei temperaturabhängiger Veränderung des Widerstandes des Heizelementes verändert sich die zur Aufrechterhaltung des Stroms erforderliche Spannung, die somit ein Maß für die Temperatur des Heizelementes bzw. seiner unmittelbaren Umgebung ist. Vorteilhafterweise ist daher vorgesehen, dass zur Überwachung der Temperatur des Verdampferkörpers der temperaturabhängige elektrische Widerstand des mit dem Verdampferkörper in wärmeaustauschender Verbindung stehenden und mit der Verdampferheizleistung beschickten Heizelementes gemessen und, insbesondere von der Steuereinheit, ausgewertet wird. Derart integrierte Heiz- und Sensorelemente sind dem Fachmann bekannt.

Günstigerweise wird die Menge an Verdampferflüssigkeit, die dem Verdampferelement während eines Zyklus zugeführt wird, in Abhängigkeit von der Differenz des aktuellen Feuchtewertes zu einem vorgegebenen Ziel-Feuchtewert gewählt. Grundsätzlich ist es ausreichend, wenn während jedes Zyklus dieselbe vorbestimmte Flüssigkeitsmenge zugeführt wird. Wie erwähnt, ist es günstig, wenn diese Menge in Abstimmung auf kleine Dimensionen des Verdampferelementes ebenfalls klein ist. Insbesondere kann die pro Zyklus eingetragene Flüssigkeitsmenge deutlich unter dem maximalen Fassungsvolumen des Verdampferkörpers liegen. Zur Beschleunigung der Einstellung der Ziel-Feuchte, insbesondere beim Anfahren der Klimakammer, wenn die Ist-Feuchte stark von der Ziel-Feuchte abweicht, können pro Zyklus jedoch größere Mengen an Verdampferflüssigkeit zugeführt werden, wobei selbstverständlich das maximale Fassungsvolumen des Verdampferkörpers eine Obergrenze darstellt. Dies hat eine Verlängerung der einzelnen Zyklen und eine Reduktion der Regelungsgenauigkeit zur Folge, was jedoch im Zustand der starken Feuchteabweichung irrelevant ist. Hier überwiegt vielmehr der Vorteil der Reduzierung der Zyklusgrenzen, die jeweils mit einer Abschaltung der Heizleistung und einer Neuzuführung von Flüssigkeit verbunden sind. Nähert sich dann die Ist-Feuchte der Ziel-Feuchte, so dass die Regelgenauigkeit höhere Priorität erhält, kann die pro Zyklus zugeführte Flüssigkeitsmenge entsprechend reduziert werden. In der Praxis werden zwei vorbestimmte Flüssigkeitsmengen ausreichen, wobei jedoch grundsätzlich auch eine feinere Mengenabstufung realisiert werden kann.

Neben der oben beschriebenen Vorrichtung zur Feuchteregelung und dem beschriebenen Verfahren zur Feuchteregelung ist auch eine Klimakammer, welche eine erfindungsgemäße Vorrichtung umfasst bzw. ein erfindungsgemäßes Verfahren einsetzt, Gegenstand der vorliegenden Erfindung.

Weitere Merkmale und Vorteile der vorliegenden Erfindung ergeben sich aus der nachfolgenden, speziellen Beschreibung und den Zeichnungen.

Es zeigen:
- Figur 1: ein schematisches Diagramm einer erfindungsgemäßen Vorrichtung.
- Figur 2: eine schematische Schnittdarstellung eines erfindungsgemäßen Verdampferkörpers.

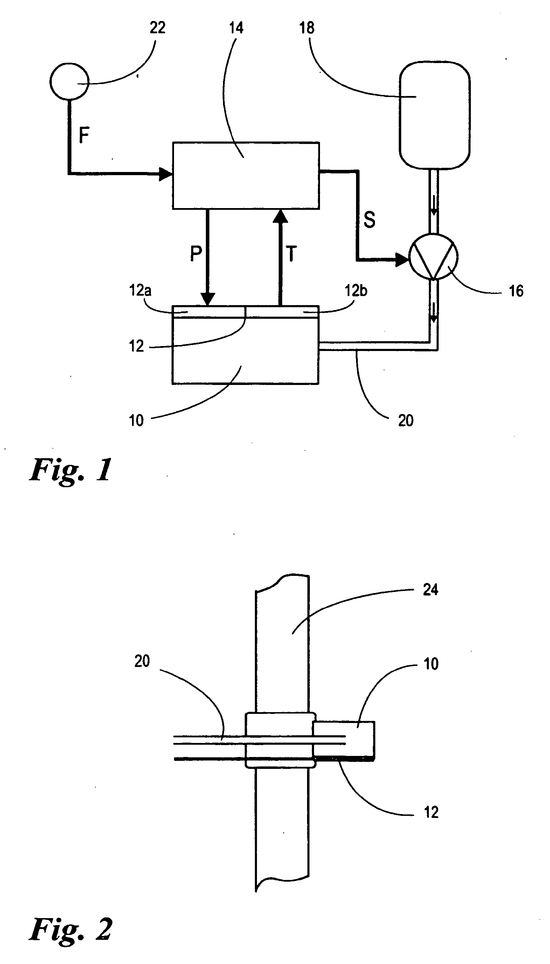

Figur 1 zeigt in Diagrammform ein Schema der erfindungsgemäßen Vorrichtung. Zentrales Element der Vorrichtung ist der Verdampferkörpers 10, der vorzugsweise in einer nicht dargestellten Klimakammer angeordnet ist. An dem Verdampferkörpers 10 ist ein Heiz/Messelement 12 angeordnet, das in der Darstellung von Figur 1 in einen Heizbereich 12a und einen Messbereich 12b unterteilt ist. Man beachte jedoch, dass diese Unterteilung rein funktionaler Natur ist. In der Praxis wird man vorzugsweise ein integriertes Heiz- und Messelement verwenden. Selbstverständlich ist jedoch auch eine getrennte Ausführung von Heizelement und Messelement möglich.

Als weiterer wesentlicher Bestandteil der erfindungsgemäßen Vorrichtung ist eine Steuerelektronik 14 vorgesehen. Diese wird vorzugsweise als Mikroprozessor mit geeigneter Programmierung ausgebildet. Andererseits ist jedoch auch eine Implementierung in digitaler und/oder analoger Hardware möglich. Der Begriff der Steuerelektronik ist hier weit zu verstehen und umfasst sowohl Schnittstellenkomponenten zur Ein- und Ausgabe von Daten, Auswerte- und Entscheidungskomponenten zur Durchführung der erforderlichen Berechnungen, Vergleiche und Entscheidungen sowie Leistungselektronik-Komponenten, insbesondere zur Erzeugung und Ausgabe einer Heizleistung.

Die Steuerelektronik umfasst wenigstens einen Leistungsausgang zur Abgabe der Heizleistung P an den Heizteil 12a des Heiz/Messelementes 12. Weiter umfasst die Steuerelektronik 14 wenigstens einen Messeingang zum Empfang eines die Temperatur des Heiz/Messelementes 12 bzw. dessen unmittelbarer Umgebung repräsentierenden Messsignals T. Bei einer getrennten Anordnung von Heizelement und Messelement kann selbstverständlich auch eine andere Temperatur des Verdampferkörpers 10 an die Steuerelektronik 14 übermittelt werden.

Weiter ist die Steuerelektronik 14 mit einem Flüssigkeitszufuhr-Stellglied 16 verbunden, welches mittels eines Steuersignals S steuerbar ist. Das Stellglied ist einerseits mit einem Flüssigkeitsreservoir 18 und andererseits über eine Verdampferflüssigkeitszuleitung 20 mit dem Verdampferkörper 10 verbunden. Als Flüssigkeitsreservoir 18 kann ein Tank, insbesondere ein Wassertank, ggf. unter Zwischenschaltung geeigneter Filter- und/oder Sterilisierungsmittel dienen. Bei der einfachsten Ausführungsform ist das Stellglied 18 als Steuerventil ausgestaltet und das Reservoir 18 ist als oberhalb von Steuerventil und Verdampferkörper angebrachter Wassertank ausgebildet, so dass ein konstanter hydrostatischer Druck am Steuerventil ansteht und die Flüssigkeitszuführung über eine zeitlich befristete Öffnung des Steuerventils, initiiert durch die Steuerelektronik 14, erfolgt. Alternativ kann das Stellglied 16 eine Pumpe, insbesondere eine Präzisionspumpe, wie etwa eine Schlauchpumpe mit Schrittmotor sein, die von der Steuerelektronik 14 angesteuert wird. Selbstverständlich ist auch eine Kombination von Pumpe und Steuerventil als Stellglied 16 denkbar.

Die Flüssigkeitszuleitung 20 kann als Schlauch oder Rohr ausgebildet sein, dessen spezielle Gestaltung in Zusammenhang mit Figur 2 näher erläutert wird.

Schließlich ist ein Feuchtesensor 22, der an geeigneter Stelle in der Klimakammer angeordnet ist, vorgesehen. Der Feuchtesensor 22 ist mit einem weiteren Messeingang der Steuerelektronik verbunden und liefert Messdaten F über eine Feuchte des Atmosphärengases in der Messkammer, insbesondere Daten bez. relativer Feuchte.

Die o.g. Elemente wirken erfindungsgemäß zusammen, indem die Steuerelektronik 14 zunächst einen Feuchtewert F vom Feuchtesensor 22 abfragt. Liegt dieser Feuchtewert F unterhalb einer vorbestimmten Ziel-Feuchte, die vorzugsweise benutzerseitig vorgegeben werden kann, initiiert die Steuerelektronik 14 einen ersten Befeuchtungszyklus. Hierzu wird das Stellglied 16 über das Steuersignal S so angesteuert, dass über die Zuleitung 20 eine definierte Menge an Verdampferflüssigkeit in den Verdampferkörper eingeleitet wird. Vorzugsweise gleichzeitig wird dem Heizteil 12a des Heiz/Messelementes 12 eine elektrische Leistung P, vorzugsweise konstanten Pegels, zugeführt, die zu einer Erwärmung des Verdampferkörpers 10 bis zum Siedepunkt der Verdampferflüssigkeit führt. Während dieser Phase fragt die Steuerelektronik 14 regelmäßig oder kontinuierlich einen Temperatur-Messwert T vom Messteil 12b des Heiz/Messelementes 12 ab. Der jeweils aktuelle Temperaturwert T wird von der Steuereinheit mit einem vorgegebenen Schwellenwert verglichen. Während dieser Verdampfungsphase verdampft die im Verdampferkörper gespeicherte Flüssigkeit und befeuchtet das Atmosphärengas in der Klimakammer. Der gemessene Temperaturwert T bleibt nach einmaligem Anstieg im Wesentlichen konstant. Dieser Zustand dauert an, bis die Flüssigkeit im Verdampferkörper 10 nahezu vollständig verdampft ist. Zu diesem Zeitpunkt endet der Kühleffekt und der vom Messteil 12b des Heiz/Messelementes 12 an die Steuereinheit 14 gesendete Temperatur-Messwert T steigt merklich an, insbesondere bis oberhalb des vorgegebenen Schwellenwertes. Nach Überschreitung des Temperatur-Schwellenwertes schaltet die Steuerelektronik die Heizleistungszufuhr P an den Heizteil 12a des Heiz/Messelementes 12 ab und fragt erneut einen Feuchtewert F vom Feuchtesensor 22 ab. Liegt dieser nach wie vor unterhalb des Ziel-Feuchtewertes, wird ein neuer Befeuchtungszyklus angestoßen. Anderenfalls wird zunächst kein neuer Befeuchtungszyklus angestoßen und lediglich der Feuchtesensor 22 regelmäßig oder kontinuierlich abgefragt. Erst wenn die Feuchte des Atmosphärengases wieder unter einen vorgegebenen Schwellenwert gesunken ist, wird ein neuer Befeuchtungszyklus initiiert.

Figur 2 zeigt schematisch eine Schnittdarstellung durch einen erfindungsgemäßen Verdampferkörper 10. Dieser ist an der Innenseite einer Begrenzungswand 24 einer Klimakammer angeordnet und ragt in deren Innenraum hinein. In innigem Kontakt mit dem Verdampferkörper 10 ist ein Heiz/Messelement 12 angeordnet. Dessen Verbindung mit der Steuerelektronik ist in Figur 2 nicht darstellt. Bei der in Figur 2 gezeigten Ausführungsform liegt das Heiz/Messelement 12 an einer Außenseite des Verdampferkörpers 10 an. Bei einer alternativen Ausführungsform kann es auch in den Verdampferkörper eingebettet sein. Diese Variante hat den Vorteil, dass eine größere Oberfläche des Verdampferelementes 10 mit dem Atmosphärengas in der Klimakammer in Kontakt steht, die Befeuchtung somit effizienter erfolgen kann.

Eingebettet im Inneren des Verdampferkörpers 10 ist die Verdampferflüssigkeitszuleitung 20, die die Begrenzungswand 24 nach außen durchsetzt und in nicht dargestellter Weise mit dem Stellglied 16 verbunden ist. Bei der dargestellten Ausführungsform ist die Flüssigkeitszuleitung 20 als Röhrchen ausgebildet, das lediglich an seiner Stirnseite im Inneren des Verdampferkörpers eine Öffnung zum Austritt der Verdampferflüssigkeit aufweist. Bei einer alternativen Ausführungsform ist der Mantel des Röhrchens in seinem gesamten, im Verdampferkörper 10 eingebetteten Bereich perforiert, um eine gleichmäßigere Befeuchtung des Verdampferkörpers 10 zu gewährleisten.

Natürlich stellen die in den Figuren illustrierten und in der speziellen Beschreibung erläuterten Ausführungsformen nur illustrative Ausführungsbeispiele der vorliegenden Erfindung dar. Insbesondere bei der speziellen Programmierung bzw. hardwaremäßigen Ausgestaltung der Steuerelektronik, bei der Wahl der verwendeten Materialien und bei der Dimensionierung des Verdampferkörper-Volumens im Verhältnis zum Klimakammer-Volumen, der einzutragenden Flüssigkeitsmengen und der aufzuwendenden Heizleistungspegel ist dem Fachmann ein breites Variationsspektrum anhand gegeben. Er wird dieses in Ansehung der Erfordernisse des konkreten Anwendungsfalles nutzen.

## Patentansprüche

1. Verfahren zur Feuchteregelung in einer Klimakammer, wobei ein mit dem Innenraum der Klimakammer in Gasaustausch stehender, poröser Verdampferkörper (10) durch Zuführung einer Verdampferflüssigkeit befeuchtet und diese durch Zuführung einer elektrischen Verdampferheizleistung (P) zur Befeuchtung eines in der Klimakammer vorhandenen Atmosphärengases verdampft wird und wobei ein Feuchtewert (F) des Atmosphärengases überwacht und die Flüssigkeitszuführung sowie die Verdampferheizleistung (P) in Abhängigkeit von dem Feuchtewert (F) geregelt werden, wobei
eine Temperatur (T) des Verdampferkörpers (10) überwacht wird, **dadurch gekennzeichnet, dass** die Regelung in einer Mehrzahl aufeinander folgender Zyklen, die in Abhängigkeit von dem jeweils aktuellen Feuchtewert (F) angestoßen werden, erfolgt, wobei während jedes Zyklus eine einmalig zu Zyklusbeginn zugeführte Menge Verdampferflüssigkeit im Wesentlichen vollständig verdampft wird und nach einem Temperaturanstieg des Verdampferkörpers (10) über einen vorgegebenen Schwellenwert hinaus der Zyklus unter Abbruch der Zuführung der Verdampferheizleistung (P) beendet wird.

2. Verfahren nach Anspruch 1,
**dadurch gekennzeichnet,**
**dass** zur Überwachung des Feuchtewertes (F) jeweils der aktuelle Feuchtewert (F) am Ende jedes Zyklus ermittelt wird.

3. Verfahren nach einem der vorangehenden Ansprüche,
**dadurch gekennzeichnet,**
**dass** die Zuführung der Verdampferflüssigkeit über ein in den Verdampferkörper (10) eingebettetes Rohr (20) erfolgt.

4. Verfahren nach einem der vorangehenden Ansprüche,
**dadurch gekennzeichnet,**
**dass** die Zyklusdauer im Bereich einiger Sekunden, insbesondere im Bereich von 1 bis 10 Sekunden liegt.

5. Verfahren nach einem der vorangehenden Ansprüche,
**dadurch gekennzeichnet,**
**dass** zur Überwachung der Temperatur (T) des Verdampferkörpers (10) ein temperaturabhängiger elektrischer Widerstand eines mit dem Verdampferkörper (10) in Wärme austauschender Verbindung stehenden und mit der Verdampferheizleistung (P) beschickten Heizelementes (12) gemessen und ausgewertet wird.

6. Verfahren nach einem der vorangehenden Ansprüche,
**dadurch gekennzeichnet,**
**dass** die Menge an Verdampferflüssigkeit, die dem Verdampferkörpers (10) während eines Zyklus zugeführt wird, in Abhängigkeit von der Differenz des aktuellen Feuchtewertes (F) zu einem vorgegebenen Ziel-Feuchtewert gewählt wird.

7. Vorrichtung zur Feuchteregelung in einer Klimakammer, umfassend
- einen porösen, mit der Klimakammer in Gasaustausch stehenden Verdampferkörper (10),
- eine Verdampferflüssigkeitszuleitung (20) zur Zuführung von Verdampferflüssigkeit zum Verdampfungskörper (10),
- ein mit dem Verdampferkörper (10) in Wärme austauschender Verbindung stehendes, elektrisches Heizelement (12a) zur Zuführung von elektrischer Heizleistung (P) zum Verdampfungskörper,
- einen Feuchtesensor (22) zur Erfassung eines Feuchtewertes (F) eines in der Klimakammer vorhandenen Atmosphärengases und
- eine Steuereinheit (14) zur Regelung, in Abhängigkeit von dem Feuchtewert (F), der Zuführung von Verdampferflüssigkeit sowie der Zuführung von elektrischer Heizleistung (P) in das Heizelement (12a), wobei
ein mit der Steuereinheit (14) verbundener Temperatursensor (12b) zur Erfassung einer jeweils aktuellen Temperatur (T) des Verdampferkörpers (10) vorgesehen ist, **dadurch gekennzeichent,** dass die Steuereinheit (14) eingerichtet ist, die Reglung in einer Mehrzahl aufeinander folgender und in Abhängigkeit von dem jeweils aktuellen Feuchtewert (F) angestoßene Zyklen durchzuführen, von denen jeder ein einmaliges Zuführen von Verdampferflüssigkeit, ein im Wesentlichen vollständiges Verdampfen der zugeführten Verdampferflüssigkeit, ein Erfassen eines Temperaturanstiegs des Verdampferkörpers (10) über einen vorgegebenen Schwellenwert hinaus und einen nachfolgenden Abbruch der Heizleistungszuführung (P) umfasst.

8. Vorrichtung nach Anspruch 7,
**dadurch gekennzeichnet,**
**dass** die Verdampferflüssigkeitszuleitung (20) als ein in den Verdampferkörper (10) eingebettetes Rohr umfasst, das außerhalb der Klimakammer mit einem Verdampferflüssigkeitsreservoir (18) verbunden ist.

9. Vorrichtung nach Anspruch 8,
**dadurch gekennzeichnet,**
**dass** die Verdampferflüssigkeitszuleitung (20) ein Steuerventil (16) und/oder eine Pumpeneinheit umfasst.

10. Vorrichtung nach einem der Ansprüche 7 bis 9,
**dadurch gekennzeichnet,**
**dass** der Verdampferkörper (10) ein poröser Keramikkörper, insbesondere ein poröser Borosilikat-Körper ist,

11. Vorrichtung nach einem der Ansprüche 7 bis 10,
**dadurch gekennzeichnet,**
**dass** das Volumen des Verdampferkörpers (10) im Bereich von etwa 0,5 bis 5 Kubikzentimeter liegt.

12. Vorrichtung nach einem der Ansprüche 7 bis 11,
**dadurch gekennzeichnet,**
**dass** der Verdampferkörper (10) innerhalb der Klimakammer angeordnet ist.

13. Vorrichtung nach einem der Ansprüche 7 bis 12,
**dadurch gekennzeichnet,**
**dass** das Heizelement (12a) einen temperaturabhängigen elektrischen Widerstand (12b) aufweist und Messmittel zur Erfassung des jeweils aktuellen Widerstandswertes mit dem Heizelement (12a) einerseits und mit der Steuereinheit (14) andererseits verbunden sind.

14. Klimakammer, umfassend eine Vorrichtung zur Feuchteregelung nach einem der Ansprüche 7 bis 13.

15. Klimakammer, insbesondere nach Anspruch 14, mit einer Feuchteregelung gemäß einem Verfahren nach einem der Ansprüche 1 bis 6.

## Claims

1. A method for regulating humidity in a climatic chamber, wherein a porous evaporator body (10) in gas exchange with the interior of the climatic chamber is wetted by supplying an evaporator liquid and the latter is evaporated by supplying an electric evaporator heating power (P) to humidify an atmosphere gas present in the climatic chamber, and wherein a humidity value (F) of the atmosphere gas is monitored and the supply of liquid as well as the evaporator heating power (P) are regulated as a function of the humidity value (F), and a temperature (T) of the evaporator body (10) is monitored,
**characterized in that**
the regulation is carried out in a plurality of successive cycles that are initiated as a function of the respective humidity value (F), and during each cycle a once-only amount of liquid supplied at the beginning of the cycle is substantially completely evaporated and, once the temperature of the evaporator body (10) rises above a preset threshold value, the cycle is terminated with the supply of evaporator heating power (P) being shut-off.

2. A method according to Claim 1
**characterized in that**
in order to monitor the humidity value (F), the respective humidity value (F) is determined at the end of each cycle.

3. A method according to any of the preceding claims,
**characterized in that**
the evaporator liquid is supplied via a tube (20) embedded in the evaporator body (10).

4. A method according to any of the preceding claims,
**characterized in that**
the cycle duration is in the range of a few seconds, in particular in the range from 1 to 10 seconds.

5. A method according to any of the preceding claims,
**characterized in that**
in order to monitor the temperature (T) of the evaporator body (10), a temperature-dependent electric resistance of a heating element (12), which is in heat exchange with the evaporator body (10) and to which is applied the evaporator heating power (P), is measured and evaluated.

6. A method according to any of the preceding claims,
**characterized in that**
the amount of evaporator liquid that is supplied to the evaporator body (10) during a cycle is selected as a function of the difference between the current humidity value (F) and a preset target humidity value.

7. An apparatus for regulating humidity in a climatic chamber, comprising
- a porous evaporator body (10) in gas exchange with the climatic chamber,
- an evaporator liquid supply line (20) for supplying evaporator liquid to the evaporator body (10),
- an electric heating element (12a) in heat exchange with the evaporator body (10) for supplying electric heating power (P) to the evaporator body,
- a humidity sensor (22) for detecting a humidity value (F) of an atmosphere gas present in the climatic chamber and
- a control unit (14) for regulating the supply of evaporator liquid as well as the supply of electric heating power (P) to the heating element (12a), as a function of the humidity value (F), wherein a temperature sensor (12b) connected to the control unit (14) is provided in order to detect a respective temperature (T) of the evaporator body (10),
**characterized in that**
the control unit (14) is set up to perform regulation in a plurality of successive cycles initiated as a function of the respective humidity value (F), each of which cycles comprises a once-only supply of evaporator liquid, the substantially complete evaporation of the evaporator liquid supplied, the detection of a rise in the temperature of the evaporator body (10) above a preset threshold value, and the subsequent shut-off the supply of heating power (P).

8. An apparatus according to Claim 7,
**characterized in that**
the evaporator liquid supply line (20) comprises a tube embedded in the evaporator body (10), said tube being connected outside the climatic chamber with an evaporator liquid reservoir (18).

9. An apparatus according to Claim 8.
**characterized in that**
the evaporator supply line (20) comprises a control valve (16) and/or a pump unit.

10. An apparatus according to any of Claims 7 to 9,
**characterized in that**
the evaporator body (10) is a porous ceramic body, in particular a borosilicate body.

11. An apparatus according to any of Claims 7 to 10,
**characterized in that**
the volume of the evaporator body (10) is in the range from approximately 0.5 to 5 cubic centimetres.

12. An apparatus according to any of Claims 7 to 11
**characterized in that**
the evaporator body (10) is arranged inside the climatic chamber.

13. An apparatus according to any of Claims 7 to 12,
**characterized in that**
the heating element (12a) has a temperature-dependent electric resistor (12b), and measuring means for determining the respective resistance value are connected with the heating element (12a) on the one hand and with the control unit (14) on the other hand.

14. A climatic chamber comprising an apparatus for regulating humidity according to any of Claims 7 to 13.

15. A climatic chamber, in particular according to Claim 14, wherein the humidity is regulated by a method according to any of Claims 1 to 6.

## Revendications

1. Procédé de régulation de l'humidité dans une chambre climatique, dans lequel un corps d'évaporation (10) poreux, en échange gazeux avec l'intérieur de la chambre climatique, est humidifié par la fourniture d'un liquide d'évaporation, ce liquide étant évaporé par l'application d'une puissance de chauffage électrique d'évaporation (P), pour humidifier un gaz atmosphérique présent dans la chambre climatique, et dans lequel une valeur d'humidité (F) du gaz atmosphérique est surveillée et la fourniture de liquide, tout comme l'application de la puissance de chauffage d'évaporation (P), est régulée en fonction de la valeur d'humidité (F), et dans lequel une température (T) du corps d'évaporation (10) est surveillée,
**caractérisé en ce que**
la régulation a lieu dans une pluralité de cycles successifs, qui sont initiés en fonction de la valeur d'humidité actuelle (F), et que lors de chaque cycle, une quantité de liquide d'évaporation fournie une fois en début de cycle est pour l'essentiel entièrement évaporée, et qu'après que la température du corps d'évaporation (10) a augmenté et dépassé une valeur seuil prédéfinie, le cycle s'achève interrompant ainsi l'application de la puissance de chauffage d'évaporation (P).

2. Procédé selon la revendication 1, **caractérisé en ce que**, pour surveiller la valeur d'humidité (F), la valeur d'humidité actuelle (F) est déterminée à la fin de chaque cycle.

3. Procédé selon l'une quelconque des revendications précédentes, **caractérisé en ce que** la fourniture du liquide d'évaporation se fait à l'aide d'un tube (20) intégré dans le corps d'évaporation (10).

4. Procédé selon l'une quelconque des revendications précédentes, **caractérisé en ce que** le cycle dure quelques secondes, en particulier entre 1 à 10 secondes.

5. Procédé selon l'une quelconque des revendications précédentes, **caractérisé en ce que**, pour surveiller la température (T) du corps d'évaporation (10), on mesure et exploite une résistance électrique thermosensible d'un élément de chauffage (12) qui est en échange thermique avec le corps d'évaporation (10) et alimenté en puissance de chauffage d'évaporation (P).

6. Procédé selon l'une quelconque des revendications précédentes, **caractérisé en ce que** la quantité de liquide d'évaporation qui est fourni au corps d'évaporation (10) pendant un cycle est déterminée en fonction de la différence entre la valeur d'humidité actuelle (F) et une valeur d'humidité cible prédéfinie.

7. Dispositif de régulation de l'humidité dans une chambre climatique comprenant
- un corps d'évaporation (10) poreux en échange gazeux avec la chambre climatique,
- une conduite d'arrivée de liquide d'évaporation (20) pour la fourniture de liquide d'évaporation dans le corps d'évaporation (10),
- un élément de chauffage électrique (12a) en échange thermique avec le corps d'évaporation (10) pour fournir une puissance de chauffage électrique (P) au corps d'évaporation,
- un capteur d'humidité (22) pour enregistrer la valeur d'humidité (F) d'un gaz atmosphérique présent dans la chambre climatique et
- une unité de contrôle (14) pour le réglage, en fonction de la valeur d'humidité (F), de la fourniture de liquide d'évaporation ainsi que de la fourniture de puissance de chauffage électrique (P) dans l'élément de chauffage (12a), dans lequel un capteur thermique (12b) relié à l'unité de contrôle (14) est prévu pour l'enregistrement de la température actuelle (T) du corps d'évaporation (10),
**caractérisé en ce que**
l'unité de contrôle (14) est disposée de sorte à effectuer le réglage d'une pluralité de cycles consécutifs initiés en fonction de la valeur d'humidité actuelle (F), chaque cycle comprenant un seul apport de liquide d'évaporation, l'évaporation pour l'essentiel complète du liquide fourni, la détection d'une augmentation de la température du corps d'évaporation (10) au-delà d'une valeur seuil prédéfinie, et une interruption consécutive de la fourniture de la puissance de chauffage (P).

8. Dispositif selon la revendication 7, **caractérisé en ce que** la conduite d'arrivée de liquide d'évaporation (20) se présente sous la forme d'un tube intégré dans le corps d'évaporation (10), ledit tube étant relié à l'extérieur de la chambre climatique à un réservoir de liquide d'évaporation (18).

9. Dispositif selon la revendication 8, **caractérisé en ce que** la conduite d'arrivée de liquide d'évaporation (20) comprend une vanne de régulation (16) et/ou une unité de pompage.

10. Dispositif selon l'une quelconque des revendications 7 à 9, **caractérisé en ce que** le corps d'évaporation (10) est un corps poreux en céramique, en particulier un corps en borosilicate.

11. Dispositif selon l'une quelconque des revendications 7 à 10, **caractérisé en ce que** le volume du corps d'évaporation (10) est de l'ordre d'environ 0,5 à 5 cm³.

12. Dispositif selon l'une quelconque des revendications 7 à 11, **caractérisé en ce que** le corps d'évaporation (10) est installé dans la chambre climatique.

13. Dispositif selon l'une quelconque des revendications 7 à 12, **caractérisé en ce que** l'élément de chauffage (12a) présente une résistance électrique thermosensible et que les moyens de mesure pour déterminer la valeur de résistance actuelle sont reliés d'un côté à l'élément de chauffage (12a) et d'un autre côté à l'unité de contrôle (14).

14. Chambre climatique comprenant un dispositif pour la régulation de l'humidité selon l'une quelconque des revendications 7 à 13.

15. Chambre climatique conçue en particulier selon la revendication 14, avec une régulation de l'humidité d'après un procédé selon l'une quelconque des revendications 1 à 6.
